# EUROPEAN PATENT APPLICATION

(11) **EP 2 639 264 A1**
(43) Date of publication of application: **18.09.2013**
(21) Application number: 12159521.9
(22) Date of filing: 14.03.2012
(51) Int. Cl.: C08K 5/18, H01B 1/12, H01B 1/20, H01B 9/02

(54) **Field grading material**

(71) Applicant: Nexans, 75008 Paris (FR)
(72) Inventor: Sonerud, Björn, 41258 Göteborg (SE); Matallana, Jérôme, 62730 Marck (FR); Allais, Arnaud, 69400 Limas (FR); Furuheim, Knut Magne, 1613 Fredrikstad (NO); Boyer, Ludovic, 62231 Sangatte (FR); Festaz, Xavier, 01800 Villieu-Loyes-Mollon (FR)
(74) Representative: Peguet, Wilfried

(57) **Abstract**

The present invention is related to 1a field grading material (1) comprising a polymeric matrix and at least one electrically conducting filler, characterized in that said electrically conducting filler is polyaniline.

## Description

The present invention relates to a field grading material including a polymeric matrix and an electrically conducting organic filler, as well as to field grading element, including said field grading material.

More particularly, the field grading material is adapted to control electric fields for medium voltage elements (especially from 6 kV to 45-60 kV) or high voltage elements (especially superior to 60 kV, and being able to go up to 800 kV), having an alternative voltage or a direct voltage.

WO 2004/038735 describes a field grading material consisting of a polymeric matrix provided with an inorganic filler. The inorganic filler comprises a field grading effective amount of particles having at least one dimension smaller than or equal to 100 nm.

However, the use of inorganic filler in a polymeric matrix does not allow to optimize the control of the electric field especially over time at high temperature, and can involve problems of compounding.

The present invention seeks to solve the above-mentioned problems of the prior art, and proposes a field grading material, more particularly in the field of medium voltage (MV) and high voltage (HV) elements, and wherein processability and electrical properties can be easily optimized.

To this end, an object of the present invention is to provide a field grading material comprising a polymeric matrix and at least one electrically conducting filler, **characterized in that** said electrically conducting filler is polyaniline.

The present invention allows advantageously to easily control the electric field by avoiding electric field enhancement due to charge accumulation, at working temperature of medium or high voltage cable. More particularly, the field grading material of the invention is thermally stable over time at high temperature (e.g. at 90°C or more).

The present invention also offers simpler compounding and makes it easier to achieve a high electrically conducting filler amount in the field grading material.

Polyaniline gives properties of non linearity of the electrical resistance of the field grading material (i.e. a resistance that decreases with an increasing electric field), so that the field grading material has a non-linear electrical resistance. Hence, the field grading material according to the invention is preferably a non linear field grading material.

Furthermore, the use of polyaniline, which is an organic polymer, can advantageously improve the flexibility of tailoring the electrical properties of the field grading material due to the possibility of varying the chain length of said polymer. The inorganic fillers used in the prior art limit the range wherein the flexibility of tailoring the electrical properties can be obtained.

Another advantage resides in the fact that preparing a field grading material including the organic polymer of the invention (i.e. polyaniline) is a simpler process and a less damaging process than the one used in compounding the inorganic filler of the prior art.

In a particular embodiment, the polyaniline is substantially not doped. For example, the emeraldine form of polyaniline is not doped by an acid. In other terms, the emeraldine form of polyaniline is neutral, so that the emeraldine form of polyaniline is not an emeraldine salt.

Hence, in using the non-doped polyaniline, the non linearity properties of the field grading material are stable at operating conditions, and especially at high temperature around 90°C or more.

The polyaniline can be selected among the leucoemeraldine, the emeraldine base, and the (per)nigraniline, or a mixture thereof.

The polyaniline preferably used in the present invention is the emeraldine form of polyaniline (i.e. emeraldine base) since, contrary to the leucoemeraldine and the (per)nigraniline forms, the emeraldine form of polyaniline advantageously is the most stable form of polyaniline concerning the non linear properties with respect to temperature, and presents better electrical conductivity than the two other forms of polyaniline.

When the polyaniline is not doped, the emeraldine form of polyaniline is preferred.

In a preferred embodiment, the polymeric matrix includes at least one elastomer polymer. The presence of elastomer in the field grading material allows advantageously to use said material in cable accessories, such as junction or termination, in order to ensure good contact between accessory and cable insulation.

The elastomer polymer can be selected among ethylene propylene diene monomer (EPDM) rubber, ethylene vinyl acetate (EVA) copolymer, and silicone rubber (e.g. liquid silicone rubber (LSR) or high temperature vulcanized (HTV) rubber), or a mixture thereof.

More particularly, the polymeric matrix is an elastomeric matrix, so that the amount of elastomer polymer(s) is more than 50% by weight in the polymeric matrix, and more preferably the polymeric matrix only comprises one or several elastomer polymer(s).

According to the invention, the field grading material can comprise from 10 to 60% by weight of electrically conducting organic filler, and more preferably from 20 to 50% by weight of electrically conducting organic filler, and even more preferably 40% by weight of electrically conducting organic filler.

The field grading material of the invention can further comprise at least one additional electrically conducting organic filler.

The advantage of using at least one additional electrically conducting organic filler in the material of the invention resides in a synergic effect of the aggregates formed between the polyaniline and said organic filler. This advantageously increases the effective field over the polyaniline properties as such, allowing the material to conduct at a lower applied electrical field.

For example, said additional electrically conducting organic filler can be carbon black.

The field grading material can comprise from 3 to 20% by weight of said additional electrically conducting organic filler, and more preferably from 3 to 10% by weight of said additional electrically conducting organic filler.

In a particular embodiment according to the invention, the field grading material only comprises the polymer matrix and electrically conducting filler(s), the electrically conducting filler(s) being especially:
- either electrically conducting organic filler(s) only,
- either electrically conducting organic filler(s) and electrically conducting inorganic filler(s), only.

Another object according to the invention is an element for grading an electric field, comprising the field grading material as defined previously, **characterized in that** the field grading material is physically in contact with an insulating layer, and more especially with an insulating layer of a power cable.

In a particular embodiment, the field grading material is a layer replacing a part of a semi-conducting layer of a power cable, said semi-conducting layer being preferably physically in contact with said insulating layer.

The power cable can typically include at least a central electrical conductor surrounded by an insulating layer, said insulated layer being surrounded by a semi-conducting layer.

More particularly, the power cable can include at least a central electrical conductor successively surrounded by a first semi-conducting layer (i.e. inner semi-conducting layer), an (electrically) insulating layer, and a second semi-conducting layer (i.e. outer semi-conducting layer). More preferably, the insulating layer is physically in contact with the inner semi-conducting layer, and with the outer semi-conducting layer. Typically, the layers of the power cable can be extruded layers.

The field grading material advantageously separates the insulating layer of a power cable from the semi-conductive element(s) and/or the insulating element(s) of a power cable accessory with which the power cable is associated. In other words, at least inside the accessory, the semi-conductive element(s) and/or the insulating element(s) of the power cable accessory are not physically in contact with the insulating layer of the power cable, thanks to said field grading material.

More preferably, the field grading material is electrically connected to the high voltage potential of the power cable, such as the central electric conductor of the power cable.

In a first embodiment, the element according to the invention can comprise a termination for power cable.

In this embodiment, at the end of the power cable positioned in said termination, the field grading material according to the invention is a layer replacing a part of the outer semi-conducting layer of the power cable. Hence, said layer surrounds the central electrical conductor, and more particularly surrounds the insulating layer of the power cable.

The termination typically includes a stress cone body and a deflector. The deflector can be a semiconducting cone which distributes the electric field geometrically. This is necessary to avoid field enhancement especially when the power cable is subject to impulse voltages during operations such as lightning strikes.

One part of the deflector is preferably physically in contact with the outer semi-conducting layer of the power cable, from one hand, and with the field grading material, from the other hand. The field grading material advantageously helps to mitigate the electric field at the transition from the cable outer semi-conducting layer to the deflector.

In a second embodiment, the element according to the invention can comprise a junction connecting two power cables together.

In this embodiment, at the end of at least one of the power cable positioned in said junction, the field grading material according to the invention is a layer replacing a part of the outer semi-conducting layer of the power cable. Hence, said layer surrounds the central electrical conductor, and more particularly surrounds the insulating layer of the power cable.

The junction typically includes an insulation, an outer semi-conducting screen, and a connector to electrically connect the two power cables together, and more particularly the central electrical conductors of said cables.

The insulation surrounds all the layers of field grading material of said cables.

The outer semi-conducting screen surrounds a part of the outer semi-conducting layers of said power cables, and a part of the layers of field grading material.

The outer semi-conducting screen is physically in contact with the outer semi-conducting layers of the power cables, and in physically in contact with the layers of field grading material.

The field grading material can be applied to a power cable accessory (e.g. junction or termination) or to a power cable by methods well-known in the art.

In a first variant, the field grading material can be molded in a power cable accessory. Then, the power cable accessory thus obtained is mounted on a power cable.

In a second variant, the field grading material can be extruded or expanded, respectively thermally or mechanically, and mounted on a power cable, respectively by heat shrinkage or elastic cold shrinkage. Then a power cable accessory is mounted on the power cable thus obtained.

The present invention will become more fully understood from the detailed description given herein below and from the accompanying drawings which are given by way of illustration only, and thus, which are not limits of the present invention, and wherein:
Figure 1 represents a longitudinal cross sectional view of an element for grading an electric field according to the invention, including a termination.
Figure 2 represents a longitudinal cross sectional view of an element for grading an electric field according to the invention, including a junction.

For reasons of clarity, the same elements are designed by identical references. Similarly, only those elements that are essential for understanding the invention are shown in diagrammatic manner, and scale is not complied with.

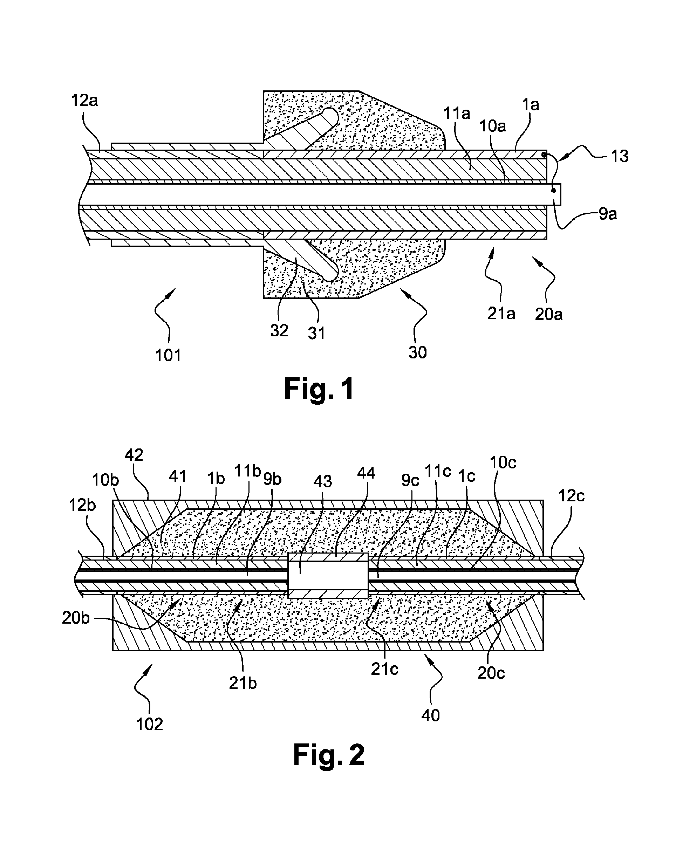

Figure 1 represents an element 101 for grading an electric field, including one of the ends 21a of a power cable 20a positioned in a termination 30, the termination 30 surrounding the power cable 20a.

The power cable 20a comprises a central electrical conductor 9a, surrounded successively by an inner semi-conducting layer 10a, an insulating layer 11a, and an outer semi-conducting layer 12a.

At the end 21a of the power cable 20a, a field grading material according to the invention as layer 1a replaces a part of the outer semi-conducting layer 12a of the power cable, so that the layer 1a longitudinally extends in the prolongation from the outer semi-conducting layer to said end 21a.

Hence, said layer 1a surrounds and is physically in contact with the insulating layer 11a of the power cable.

In addition, the layer 1a of field grading material is electrically connected to the central electrical conductor 9a by a conducting connection 13.

The termination 30 includes:
- a stress cone body 31, and
- a deflector 32.

The stress cone body 31 surrounds a part of the layer 1a of field grading material, the stress cone body being an electrically insulating body. The deflector 32 is a semiconducting cone surrounding a part of the outer semi-conducting layer 12a and a part of the layer 1a of field grading material. The deflector 32 is physically in contact with the outer semi-conducting layer 12a of the power cable, and in physically in contact with the layer 1a of field grading material. Hence, at least inside the termination 30, the field grading material 1a separates the insulating layer 11a from the semi-conductive element 32.

Figure 2 represents an element 102 for grading an electric field, including one of the ends 21b of a first power cable 20b and one of the ends 21c of a second power cable 20c, positioned in a junction 40, the junction 40 surrounding the power cables 20b and 20c.

Both power cables 20b and 20c respectively comprise a central electrical conductor 9b, 9c, surrounded successively by an inner semi-conducting layer 10b,10c, an insulating layer 11b,11c, and an outer semi-conducting layer 12b,12c.

At the end 21b,21c of each power cable 20b,20c, a field grading material according to the invention as layer 1b,1c replaces a part of the outer semi-conducting layer 12b,12c of the power cable, so that the layer 1b longitudinally extends in the prolongation from the outer semi-conducting layer 12b to the end 21b of the power cable 20b, and the layer 1c longitudinally extends in the prolongation from the outer semi-conducting layer 12c to the end 21c of the power cable 20c.

Hence, said layer 1b,1c surrounds and is physically in contact with the insulating layer 11b,11c of the power cable 20b,20c.

The junction 102 includes:
- an insulation of premoulded joint 41,
- an outer semi-conducting screen 42, and
- a connector 43 surrounded by a conducting screen 44, to electrically connect the cable 20b and the cable 20c together in the junction 102.

The insulation 41 surrounds all the layer 1b and the layer 1c of field grading material, the premoulded joint being an electrically insulating joint.

The conductive outer screen 42 surrounds a part of the outer semi-conducting layer 12b and 12c of said power cables 20b,20c, and a part of the layers 1b,1c of field grading material. The conductive outer screen 42 is physically in contact with the outer semi-conducting layers 12b,12c of the power cable, and in physically in contact with the layers 1b,1c of field grading material. Hence, at least inside the junction 40, the field grading material 1b separates the insulating layer 11b from the semi-conductive element 42, and the field grading material 1c separates the insulating layer 11c from the semi-conductive element 42.

The connector 43 allows to electrically connect the central electrical conductor 9b of the power cable 9b with the central electrical conductor 9c of the power cable 20c.

In addition, the layers 1b and 1c of field grading material are electrically connected to the central electrical conductor 9b and 9c by the intermediate of the connector 43 surrounded by its conducting screen 44.

According to the present invention and for example, the layers 1a 1b and 1c of field grading material used in figures 1 and 2 are extruded layers including 40 % by weight of non doped emeraldine form of polyaniline, commercialized by Eeonyx Corporation under the reference Emeraldine Base (undoped polyaniline), mixed within 60 % by weight of EPDM rubber (polymeric matrix), commercialized by LANXESS under the reference Keltan 2340A.

## Claims

1. Field grading material (1a, 1b, 1c) comprising a polymeric matrix and at least one electrically conducting filler, **characterized in that** said electrically conducting filler is polyaniline.

2. Material according to claim 1, **characterized in that** the emeraldine form of polyaniline is substantially not doped.

3. Material according to claim 1 or 2, **characterized in that** said polyaniline is the emeraldine form of polyaniline.

4. Material according to any one of the preceding claims, **characterized in that** the polymeric matrix includes at least one elastomer polymer.

5. Material according to claim 4, **characterized in that** said elastomer polymer is selected among ethylene propylene diene monomer (EPDM) rubber, ethylene vinyl acetate (EVA) copolymer, and silicone rubber, or a mixture thereof.

6. Material according to any one of the preceding claims, **characterized in that** the material comprises from 10 to 60% by weight of electrically conducting organic filler.

7. Material according to any one of the preceding claims, **characterized in that** the material comprises 40% by weight of electrically conducting organic filler.

8. Material according to any one of the preceding claims, **characterized in that** the material further comprises at least one additional electrically conducting organic filler.

9. Material according to claim 8, **characterized in that** the additional electrically conducting organic filler is carbon black.

10. Element (101, 102) for grading an electric field, comprising the field grading material (1a, 1b, 1c) as defined in any one of claims 1 to 9, **characterized in that** the field grading material (1a, 1b, 1c) is physically in contact with an insulating layer (11a, 11b, 11c).

11. Element according to claim 10, **characterized in that** the field grading material is a layer (1a, 1b, 1c) replacing a part of a semi-conducting layer (12a, 12b, 12c) of a power cable (20a, 20b, 20c).

12. Element (101) according to claim 10 or 11, **characterized in that** the element comprises a termination (30) for power cable (20a).

13. Element (102) according to claim 10 or 11, **characterized in that** the element comprises a junction (40) connecting two power cables (20b, 20c) together.

## Amended claims

### Amended claims in accordance with Rule 137(2) EPC.

**1.** Power cable accessory or power cable comprising a field grading material (1a, 1b, 1c), said field grading material comprising a polymeric matrix and at least one electrically conducting filler, **characterized in that** said electrically conducting filler is polyaniline.

**2.** Power cable accessory or power cable according to claim 1, **characterized in that** the emeraldine form of polyaniline is substantially not doped.

**3.** Power cable accessory or power cable according to claim 1 or 2, **characterized in that** said polyaniline is the emeraldine form of polyaniline.

**4.** Power cable accessory or power cable according to any one of the preceding claims, **characterized in that** the polymeric matrix includes at least one elastomer polym er.

**5.** Power cable accessory or power cable according to claim 4, **characterized in that** said elastomer polymer is selected among ethylene propylene diene monomer (EPDM) rubber, ethylene vinyl acetate (EVA) copolymer, and silicone rubber, or a mixture thereof.

**6.** Power cable accessory or power cable according to any one of the preceding claims, **characterized in that** the material comprises from 10 to 60% by weight of electrically conducting organic filler.

**7.** Power cable accessory or power cable according to any one of the preceding claims, **characterized in that** the material comprises 40% by weight of electrically conducting organic filler.

**8.** Power cable accessory or power cable according to any one of the preceding claims, **characterized in that** the material further comprises at least one additional electrically conducting organic filler.

**9.** Power cable accessory or power cable according to claim 8, **characterized in that** the additional electrically conducting organic filler is carbon black.

**10.** Power cable accessory or power cable according to any one of claims 1 to 9, comprising an element (101, 102) for grading an electric field, comprising the field grading material (1a, 1b, 1c), the field grading material (1a, 1b, 1c) being physically in contact with an insulating layer (11a, 11b, 11c).

**11.** Power cable accessory or power cable according to claim 10, **characterized in that** the field grading material is a layer (1a, 1b, 1c) replacing a part of a semi-conducting layer (12a, 12b, 12c) of the power cable (20a, 20b, 20c).

**12.** Power cable accessory or power cable according to claim 10 or 11, **characterized in that** the element (101) comprises a termination (30) for power cable (20a).

**13.** Power cable accessory or power cable according to claim 10 or 11, **characterized in that** the element (102) comprises a junction (40) connecting two power cables (20b, 20c) together.

**14.** Power cable accessory or power cable according to any one of the preceding claims, **characterized in that** the field grading material is a nonlinear field grading material.

**15.** Use of polyaniline as filed grading element in the manufacturing of a field grading material defined in any one of the claims 1 to 14.
